# EUROPEAN PATENT SPECIFICATION

(11) **EP 4 435 583 B1**
(45) Date of publication and mention of the grant of the patent: **21.01.2026**
(21) Application number: 23191017.5
(22) Date of filing: 11.08.2023
(51) Int. Cl.: G06F 3/12

(54) **PRINTING CONTROL SYSTEM, PROGRAM, AND PRINTING CONTROL METHOD**
DRUCKSTEUERUNGSSYSTEM, PROGRAMM UND DRUCKSTEUERUNGSVERFAHREN
SYSTÈME DE COMMANDE D'IMPRESSION, PROGRAMME ET PROCÉDÉ DE COMMANDE D'IMPRESSION

(30) Priority: 20.03.2023 JP 2023044331
(43) Date of publication of application: 25.09.2024
(73) Proprietor: FUJIFILM Business Innovation Corp., Minato-ku Tokyo (JP)
(72) Inventor: KOMAZAWA, Hisao, Yokohama-shi, Kanagawa (JP)
(74) Representative: Kurig, Thomas

(56) References cited:
- JP-A- 2018 116 098
- US-A1- 2002 140 973

## Description

### BACKGROUND OF THE INVENTION

### (i) Field of the Invention

The present disclosure relates to a printing control system, a program, and a printing control method.

### (ii) Description of Related Art

JP1999-170489A (JP H11-170489A) discloses a printed matter image inspection device that is provided with a general-purpose network interface so that printing quality and operation information of a printing machine can be understood online without being disposed in the vicinity of the printing machine.

JP2003-276278A discloses a printing system in which a plurality of printing devices are connected to each other via a network, and variations in calibration execution timing between printing devices are reduced by prioritizing calibration execution timing information from the printing device with a high accuracy rank of an environment sensor.

US 2002/140973 A1 discloses an image processing system in which a plurality of image processing apparatuses and a management apparatus are connected to each other via a network, the management apparatus forms the image processing apparatuses into one or more groups based on apparatus attribute information, acquires control variable value information from an image processing apparatus in a group, and sends the acquired information to the other image processing apparatuses in the group. The other image processing apparatuses receive the control variable value information sent from the management apparatus, and execute image processing based on the received information.

JP 2018 116098 A discloses a printing system comprising air conditioner and printing devices and a management device. When receiving an operation stop notification from the air conditioner, the management device issues a print stop instruction for stopping a printing operation only to the printing device whose printing operation receives an influence due to the stop of operation of the air conditioner among the plurality of printing devices.

### SUMMARY OF THE INVENTION

In a printing factory that performs printing for business use, a printing device row called a printing line is formed by a plurality of printing devices and a device that performs post-processing of a printed matter printed by the plurality of printing devices. However, even a plurality of printing devices operating in the identical environmental region such as a printing factory may have different optimum environmental conditions such as temperature and humidity.

The printing quality of the printing device that performs printing on the printing paper is sensitive to environmental changes such as a temperature change and a humidity change, and the printing quality cannot be maintained in a case where the printing device row is operated in an environmental state that is different from the optimum environmental condition.

An object of the present invention is to provide a printing control system, a program, and a printing control method which can maintain the quality of a printed matter output from a printing device row in a case of controlling operations of the printing device rows each including a plurality of printing devices having different optimum environmental conditions.

The present invention is defined in the appended claims. The following disclosure serves a better understanding of the present invention.

### BRIEF DESCRIPTION OF THE DRAWINGS

Exemplary embodiment(s) of the present invention will be described in detail based on the following figures, wherein:

Fig. 1 is a diagram illustrating a configuration of a printing control system according to an exemplary embodiment of the present disclosure;
Fig. 2 is a block diagram illustrating a hardware configuration of a printing control server 10 in the exemplary embodiment of the present disclosure;
Fig. 3 is a block diagram illustrating a functional configuration of the printing control server 10 in the exemplary embodiment of the present disclosure;
Fig. 4 is a diagram illustrating an example of an environment setting screen in a case where the printing control server 10 performs environment setting such as an optimum environmental condition for each of printing lines 1 to 3;
Fig. 5 is a diagram illustrating an example of an additional screen of the optimum environmental condition;
Fig. 6 is a diagram illustrating a state in which the optimum environmental condition is set for each of the printing lines 1 to 3;
Fig. 7 is a flowchart illustrating an operation in a case where a control unit 44 performs grouping of printing lines;
Fig. 8 is a diagram illustrating a state in which grouping of printing lines is executed;
Fig. 9 is a flowchart illustrating a state in which the control unit 44 controls a plurality of printing lines for each group on the basis of a temperature and a humidity in a printing factory; and
Fig. 10 is a diagram for describing an operation control example for enabling execution of a print job with a high priority.

### DETAILED DESCRIPTION OF THE INVENTION

Next, an exemplary embodiment of the present disclosure will be described in detail with reference to the drawings.

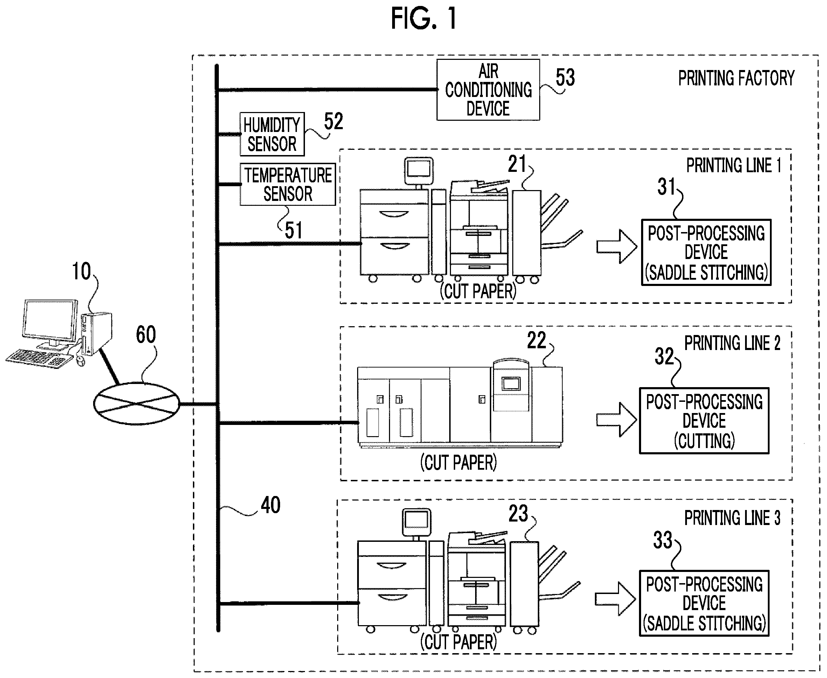

Fig. 1 is a diagram illustrating a system configuration of a printing control system according to an exemplary embodiment of the present disclosure.

As illustrated in Fig. 1, the printing control system of the exemplary embodiment of the present disclosure is configured such that printing devices 21 to 23, post-processing devices 31 to 33, a temperature sensor 51, a humidity sensor 52, and an air conditioning device 53, which are arranged in the printing factory, are connected to the printing control server 10 via a network 40 and the Internet 60 in the printing factory.

The post-processing devices 31 to 33 are devices that execute post-processing of printed matters printed by the printing devices 21 to 23, respectively. Specifically, the post-processing devices 31 and 33 execute saddle stitching processing of the printed matters printed by the printing devices 21 and 23. Further, the post-processing device 32 executes cutting processing of the printed matter printed by the printing device 22.

The printing device 21 and the post-processing device 31 constitute a printing line 1, and the printing device 22 and the post-processing device 32 constitute a printing line 2. Further, the printing device 23 and the post-processing device 33 constitute a printing line 3.

As described above, in the present exemplary embodiment, the description is made that three printing lines 1 to 3 which are printing device rows are arranged in the printing factory.

Here, the printing qualities of the printing devices 21 to 23 that perform printing on the printing paper are sensitive to environmental changes such as a temperature change and a humidity change, and there are optimum environmental conditions in which the printing qualities are stable. Therefore, the printing quality cannot be maintained in a case where the printing lines 1 to 3 are operated in an environmental state different from the optimum environmental condition. Further, in a printing factory that performs printing processing for business use, in a case where the printing quality such as a hue of the printed matter does not satisfy a predetermined condition, the printed matter cannot be delivered and a huge amount of waste is generated.

Therefore, in the printing factory, the temperature sensor 51 that detects the temperature in the environmental region of the printing factory, and the humidity sensor 52 that detects the humidity in the environmental region of the printing factory are provided. The printing control server 10 acquires environmental information of the printing factory from the temperature sensor 51 and the humidity sensor 52, and controls the operation of the printing lines 1 to 3 on the basis of the acquired environmental information.

In the printing factory, the air conditioning device 53 is provided as an environment adjusting device for adjusting an environmental state such as a temperature and a humidity in the printing factory. The air conditioning device 53 has a function of adjusting the temperature and the humidity in the printing factory, which is an environmental region. The printing control server 10 can adjust the environmental state such as the temperature and the humidity in the printing factory by controlling the air conditioning device 53 via the Internet 60 and the network 40.

However, in a case where a plurality of printing lines 1 to 3 are present in the identical environmental region such as the printing factory, and the optimum environmental conditions of the respective printing lines 1 to 3 are different, it is difficult to operate all the printing lines 1 to 3 simultaneously under optimum environmental conditions, respectively.

Therefore, in a case where the printing control server 10 of the present exemplary embodiment controls the operations of the three printing lines 1 to 3 having different optimum environmental conditions via the Internet 60 and the network 40, the printing control server 10 maintains the quality of the printed matters output from the printing lines 1 to 3 by performing control described below.

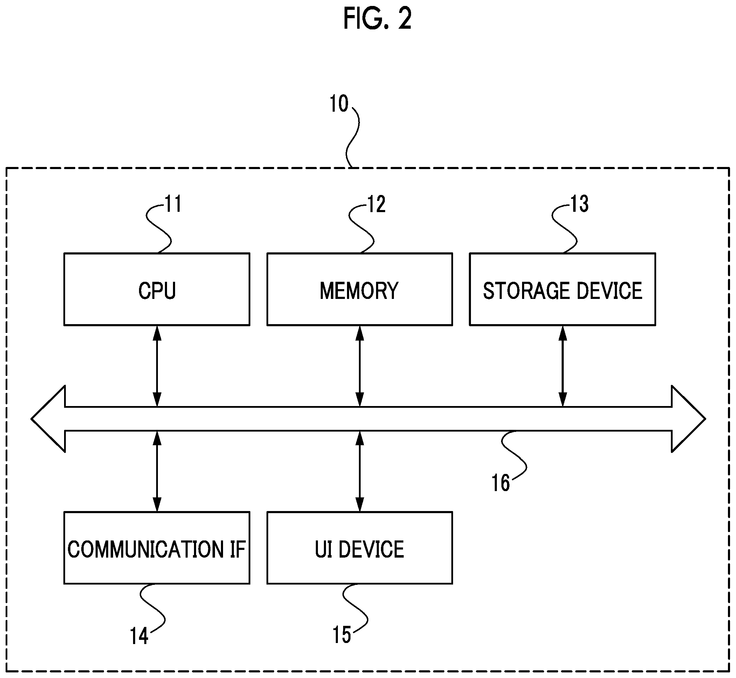

Next, a hardware configuration of the printing control server 10 in the printing control system of the present exemplary embodiment is illustrated in Fig. 2.

As illustrated in Fig. 2, the printing control server 10 includes a CPU 11, a memory 12, a storage device 13 such as a hard disk drive, a communication interface (abbreviated as IF) 14 that transmits and receives data to and from external devices via a network 40, and a user interface (abbreviated as UI) device 15 including a touch panel or a liquid crystal display and a keyboard. These constituents are connected to each other via a control bus 16.

The CPU 11 is a processor that controls the operation of the printing control server 10 by executing predetermined processing on the basis of a control program stored in the memory 12 or the storage device 13. In the present exemplary embodiment, the description has been made in which the CPU 11 reads and executes the control program stored in the memory 12 or the storage device 13, but the present disclosure is not limited thereto. The control program may be provided in a form of being recorded on a computer-readable recording medium. For example, this program may be provided in a form of being recorded on an optical disc such as a compact disc (CD)-ROM and a digital versatile disc (DVD)-ROM or in a form of being recorded on a semiconductor memory such as a universal serial bus (USB) memory and a memory card. Further, the control program may be acquired from an external device via a communication line connected to the communication interface 14.

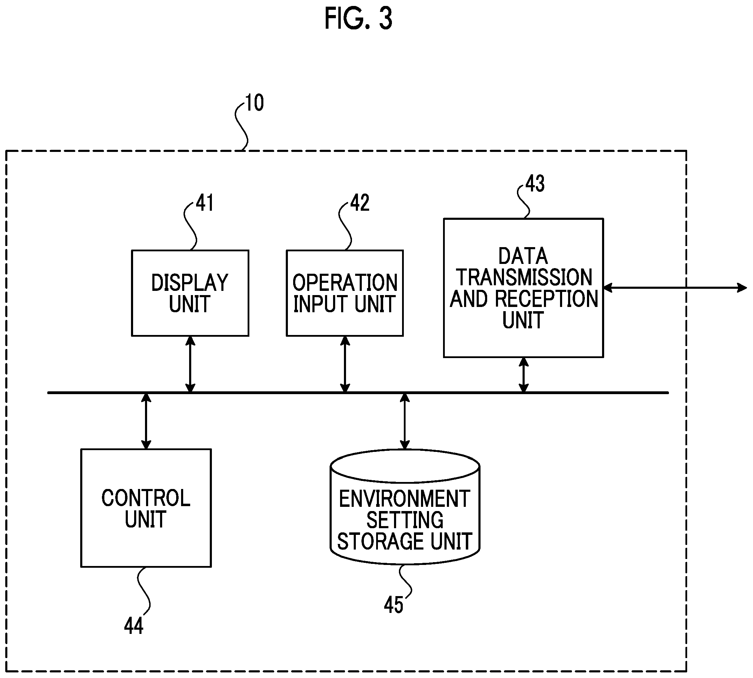

Fig. 3 is a block diagram illustrating a functional configuration of the printing control server 10 realized by executing the control program.

As illustrated in Fig. 3, the printing control server 10 of the present exemplary embodiment includes a display unit 41, an operation input unit 42, a data transmission and reception unit 43, the control unit 44, and an environment setting storage unit 45.

The operation input unit 42 receives various inputs from a user. The display unit 41 is controlled by the control unit 44 to display various kinds of information to the user. The data transmission and reception unit 43 transmits and receives data to and from the temperature sensor 51, the humidity sensor 52, the printing devices 21 to 23, the post-processing devices 31 to 33, and the air conditioning device 53 via the Internet 60 and the network 40.

The control unit 44 controls the operations of the printing devices 21 to 23, the post-processing devices 31 to 33, and the air conditioning device 53 on the basis of the temperature information and the humidity information in the printing factory acquired from the temperature sensor 51 and the humidity sensor 52.

The environment setting storage unit 45 stores various kinds of environment setting information such as an optimum environmental condition for each of the printing lines 1 to 3.

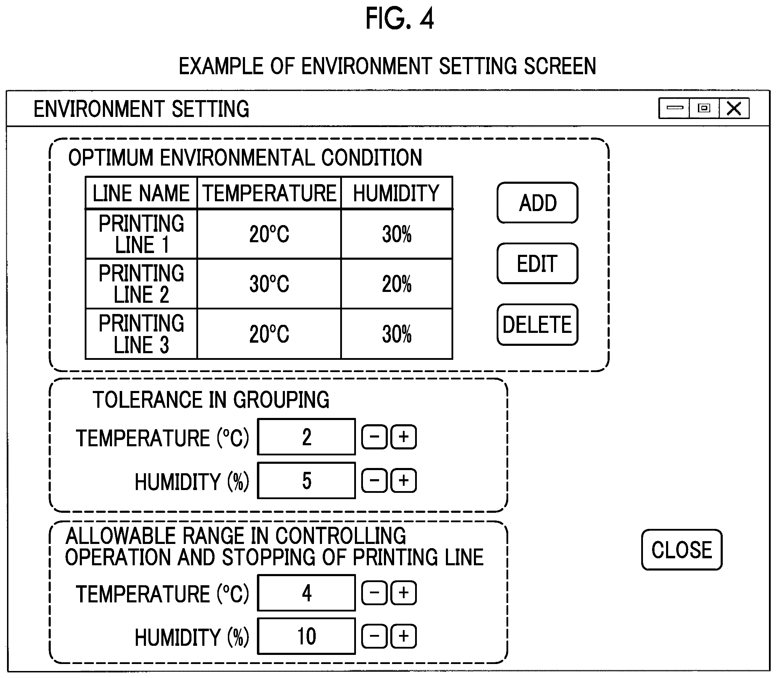

An example of an environment setting screen in a case where the printing control server 10 performs environment setting such as an optimum environmental condition for each of the printing lines 1 to 3 is illustrated in Fig. 4.

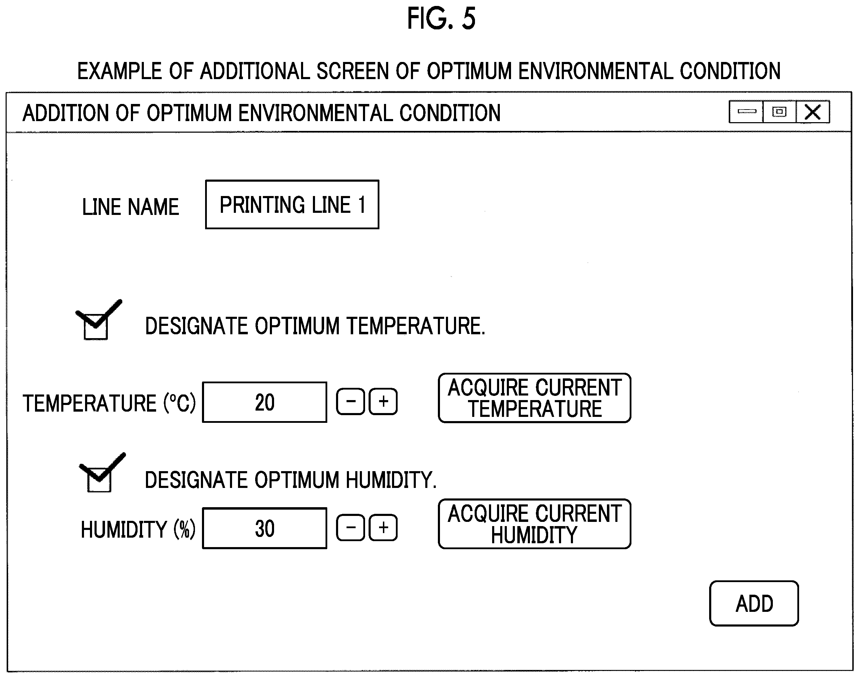

In the example of the environment setting screen illustrated in Fig. 4, it can be seen that the optimum temperature and the optimum humidity for each printing line are set as the optimum environmental condition. An example of an additional screen in a case where the optimum environmental condition is newly added and set is illustrated in Fig. 5. By operating an "add" button on the environment setting screen illustrated in Fig. 4, the additional screen for the optimum environmental condition as illustrated in Fig. 5 is displayed.

Then, on the additional screen for the optimum environmental condition illustrated in Fig. 5, a state is illustrated in which the optimum conditions of 20°C as the optimum temperature and 30% as the optimum humidity are set for the printing line with the line name of the "printing line 1". By operating the operation buttons of "acquire current temperature" and "acquire current humidity", the current temperature acquired by the temperature sensor 51 and the current humidity acquired by the humidity sensor 52 are directly set as the optimum temperature and the optimum humidity. This operation button is used, for example, in a case where the calibration such as gradation correction is performed and the temperature and the humidity at that time are set as the optimum temperature and the optimum humidity.

Further, on the environment setting screen illustrated in Fig. 4, a tolerance in grouping for grouping a plurality of printing lines can be set. In Fig. 4, 2°C and 5% are set as the temperature tolerance and the humidity tolerance in grouping, respectively. By making such settings, the printing line having the optimum temperature of 20°C and the printing line having the optimum temperature of 22°C can be grouped as the identical group on the assumption that the optimum conditions are within a preset range. Further, by making such settings, the printing line having the optimum humidity of 30% and the printing line having the optimum humidity of 35% can be grouped as the identical group on the assumption that the optimum conditions are within a preset range.

Further, on the environment setting screen illustrated in Fig. 4, an allowable range from the optimum conditions in a case of operating the printing line and in a case of stopping the operation can be set. In Fig. 4, 4°C is set as the temperature tolerance, and 10% is set as the humidity tolerance. By making such settings, the printing line having the optimum temperature of 20°C is controlled to be operated in a case where the temperature of the printing factory is within a range of 20±4°C, and is controlled to stop the operation in a case where the temperature is out of the range. Further, by making such settings, the printing line having the optimum humidity of 30% is controlled to be operated in a case where the humidity of the printing factory is within a range of 30±10%, and is controlled to stop the operation in a case where the humidity is out of the range.

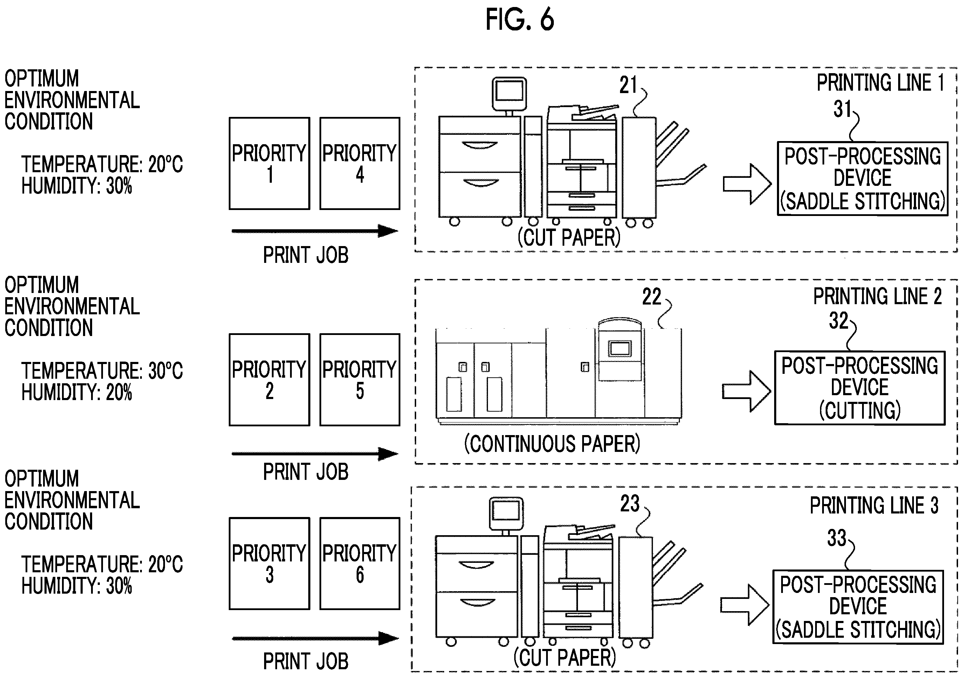

A state in which such optimum environmental conditions are set for each of the printing lines 1 to 3 is illustrated in Fig. 6. Referring to Fig. 6, in the printing line 1 including the printing device 21 and the post-processing device 31, the optimum temperature is set to 20°C and the optimum humidity is set to 30% as the optimum environmental conditions. Further, in the printing line 2 including the printing device 22 and the post-processing device 32, the optimum temperature is set to 30°C and the optimum humidity is set to 20% as the optimum environmental conditions. Furthermore, in the printing line 3 including the printing device 23 and the post-processing device 33, the optimum temperature is set to 20°C and the optimum humidity is set to 30% as the optimum environmental conditions.

Then, the following description will be made assuming that two print jobs with different priorities are assigned to each of the printing lines 1 to 3 in which the optimum environmental conditions are set.

In Fig. 6, print jobs with the priority 1 and the priority 4 are assigned to the printing line 1. Further, print jobs with the priority 2 and the priority 5 are assigned to the printing line 2, and print jobs with the priority 3 and the priority 6 are assigned to the printing line 3. Here, the smaller the numerical value of the priority, the higher the priority. That is, it means that the print job with the priority 1 has a higher priority than the print job with the priority 2. The priority is set, for example, on the basis of the delivery date of the printed matter, and the print job for printing the printed matter having the earliest delivery date is set to the highest priority. However, the priority is set not only by the delivery date but also by various conditions such as the printing amount and the delivery destination of the printed matter.

In a case where such optimum conditions are set, in a case where the plurality of printing lines 1 to 3 are operated in the identical environmental region, the control unit 44 groups a plurality of printing lines in which the optimum environmental conditions set for each of the plurality of print lines 1 to 3 are within the preset range.

Then, the control unit 44 detects the environmental states such as the temperature and humidity of the environmental region in which the plurality of printing lines 1 to 3 are operated, using the temperature sensor 51 and the humidity sensor 52.

Then, in a case where the detected environmental state is within the allowable range preset from the optimum environmental conditions of the plurality of printing lines that are grouped, the control unit 44 operates the plurality of printing lines that are grouped.

In a case where the detected environmental state is no longer within the preset range from the optimum environmental conditions of the plurality of printing lines being operated that are grouped, the control unit 44 stops the operations of the plurality of printing lines being operated.

Then, in a case where the environmental state in the environmental region is changed due to the operations of the plurality of printing lines included in the identical group, and the changed environmental state deviates from the optimum environmental conditions of the plurality of printing lines, which are grouped, by more than the preset range, so that the operations of the plurality of printing lines are stopped, even in a case where the subsequently detected environmental state falls within the preset range from the optimum environmental conditions of the plurality of printing lines that are grouped, the control unit 44 operates only the printing line to which the printing processing with a higher priority is assigned among the plurality of printing lines that are grouped.

In a case where there are a plurality of groups of printing lines in which the detected environmental state is within the preset range from the optimum environmental condition, the control unit 44 preferentially operates a group including the printing line to which the printing processing with a higher priority is assigned among the plurality of groups of printing lines.

Further, in a case the printing processing by a certain printing line is ended, the control unit 44 controls the air conditioning device 53 such that the environmental state of the environmental region where the plurality of printing lines are arranged approaches the optimum environmental condition of the printing line to which the printing processing with the highest priority is assigned.

In the present exemplary embodiment, a case where the environmental state includes both the temperature and the humidity of the environmental region such as the printing factory is described, but the operation control of the printing lines 1 to 3 may be performed on the basis of only any information of the temperature and the humidity of the environmental region.

That is, in the present exemplary embodiment, since the environmental state includes both the temperature and the humidity of the printing factory, in a case where the detected temperature is within an allowable temperature range from the optimum temperature and the detected humidity is within an allowable humidity range, the control unit 44 determines that the detected environmental state is within the preset range from the optimum environmental condition.

Next, the operation of the printing control server 10 of the present exemplary embodiment will be described in detail with reference to the drawings.

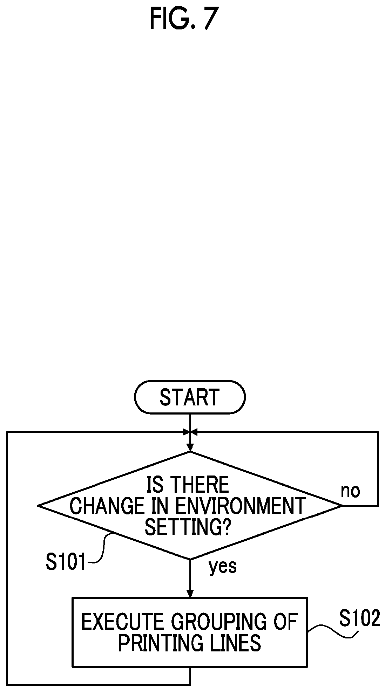

First, an operation in a case where the control unit 44 performs grouping of printing lines is illustrated in the flowchart of Fig. 7.

For example, in a case where the environment setting such as the optimum temperature and the optimum humidity set for the printing line is changed, added, or deleted on the environment setting screen as illustrated in Fig. 4, the control unit 44 determines in step S101 that there is a change in the environment setting.

Then, in a case where it is determined in step S101 that there is a change in the environment setting, the control unit 44 executes grouping of printing lines in step S102.

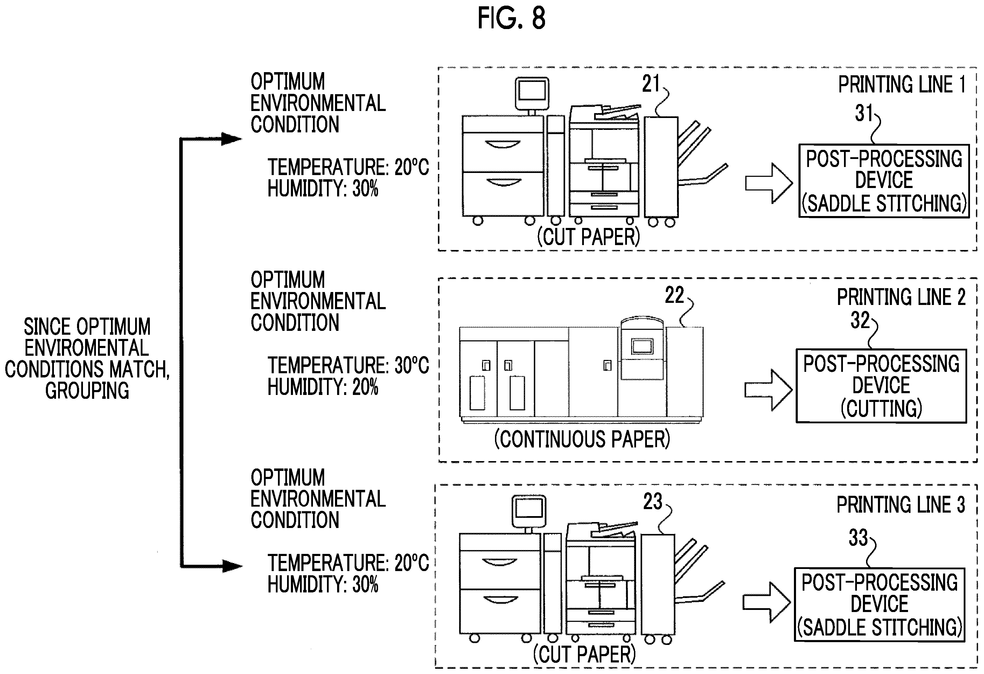

A state in which grouping of printing lines is executed is illustrated in Fig. 8. Fig. 8 illustrates a state where it is determined that the optimum environmental conditions of the printing line 1 having the optimum temperature of 20°C match the optimum environmental conditions of the optimum humidity of 30% and the printing line 3 having the optimum temperature of 20°C and the optimum humidity of 30%, and the printing line 1 and the printing line 3 are grouped. In the following description, the description is made that the printing line 1 and the printing line 3 are grouped and set as a group 1, and the printing line 2 is independently set as a group 2.

Then, in principle, the control unit 44 controls the operation start and the operation stop for each group obtained by grouping the plurality of printing lines, on the basis of the environmental state such as the temperature and the humidity in the printing factory.

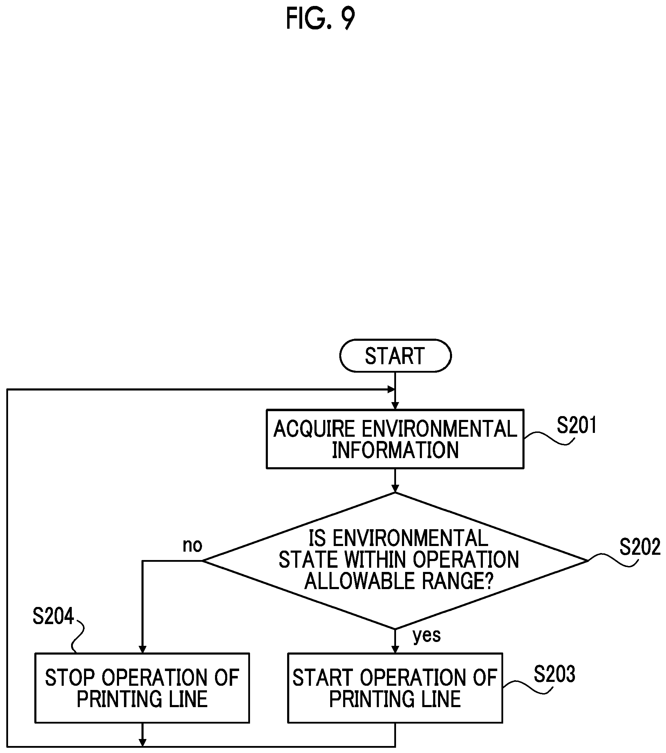

A state in which the control unit 44 controls the plurality of printing lines for each group on the basis of the temperature and the humidity in the printing factory is illustrated in the flowchart of Fig. 9.

First, the control unit 44 acquires the environmental information in the printing factory in step S201. Specifically, the control unit 44 acquires the temperature information of the printing factory by the temperature sensor 51, and acquires the humidity information of the printing factory by the humidity sensor 52.

Then, in step S202, the control unit 44 determines whether or not the environmental state of the printing factory based on the acquired environmental information is within an operation allowable range of the group of printing lines.

In a case where it is determined in step S202 that the environmental state of the printing factory is within an operation allowable range of a group of a certain printing line, the control unit 44 starts the operation of the printing line belonging to the group in step S203.

In a case where it is determined in step S202 that the environmental state of the printing factory is out of an operation allowable range of a group of a certain printing line being operated, the control unit 44 stops the operation of the printing line belonging to the group in step S204.

It may not be possible to appropriately execute a print job with a high priority by simply controlling the operation start and operation stop for each group of printing lines in which the temperature and the humidity of the printing factory are within the operation allowable range. For example, in a case where grouping is performed in which two adjacent printing lines belong to the identical group and the two printing lines are operated at the same time, the temperature may exceed the optimum temperature due to heat generation. Further, a certain print job is completed, and a print job with the next highest priority is executed, but the optimum environmental condition of the printing line to which the print job is assigned may not match the current environmental state.

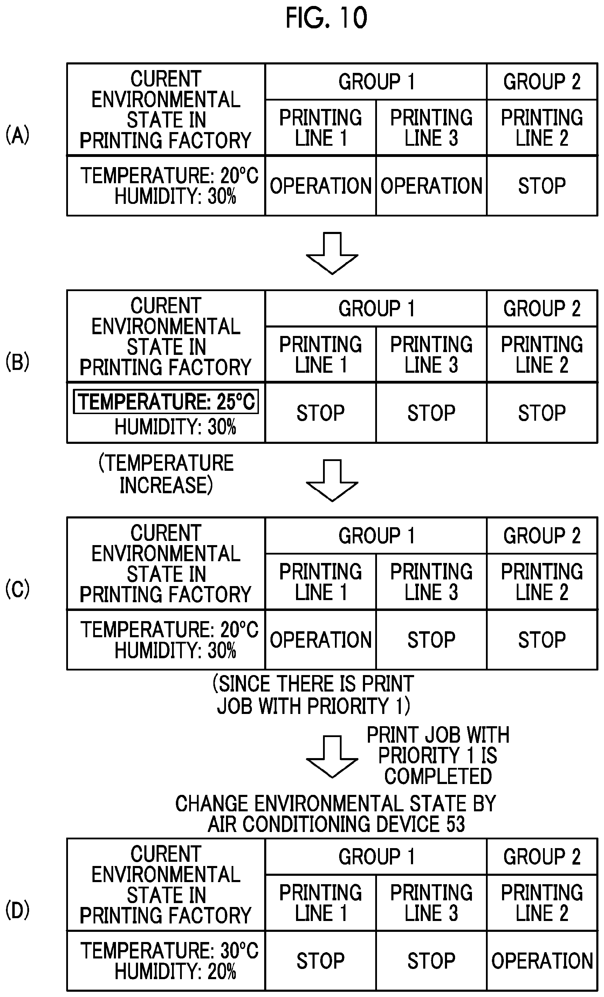

An operation control example for enabling execution of a print job with a high priority even in such a case is illustrated in Fig. 10.

A part (A) in Fig. 10 illustrates a case where the environmental state of the printing factory is a temperature of 20°C and a humidity of 30%, and the control unit 44 puts the printing lines 1 and 3 belonging to the group 1 in an operation state. Then, the control unit 44 puts the printing line 2 belonging to the group 2 in a stopped state.

A part (B) in Fig. 10 illustrates a case where the environmental state of the printing factory is a temperature of 25°C and a humidity of 30%. In this case, the control unit 44 determines that the temperature of 25°C is separated from the optimum temperature of the group 1 of 20°C by 5°C, and is out of the allowable temperature range of 20±4°C. Therefore, the control unit 44 stops the operations of the printing lines 1 and 3 belonging to the group 1, and puts the printing lines 1 and 3 into the stopped state.

However, as illustrated in Fig. 6, the print job with the priority 1 that is the highest priority is assigned to the printing line 1. Therefore, in order to execute the print job with the priority 1, even in a case where the temperature of the printing factory drops to 20°C as illustrated in a part (C) in Fig. 10, the control unit 44 operates only the printing line 1, and keeps the printing line 3 in the stopped state.

Then, in a case where the print job with the priority 1 is completed, the print job with the priority 2 assigned to the printing line 2 is the print job with the highest priority among all the print jobs assigned to printing lines 1 to 3.

Therefore, in order to execute the print job with the priority 2, the control unit 44 controls the air conditioning device 53 such that the environmental state of the printing factory approaches the optimum environmental condition of the printing line 2. Specifically, the control unit 44 controls the air conditioning device 53 such that the temperature and the humidity of the printing factory are the optimum temperature of 30°C and the optimum humidity of 20%, which are the optimum environmental conditions of the printing line 2.

Then, as illustrated in a part (D) in Fig. 10, in a case where the temperature and the humidity of the printing factory become, for example, 30°C and 20%, and fall within the preset range from the optimum environmental conditions of the printing line 2, the control unit 44 starts the operation of the printing line 2. As a result, the print job with the priority 2 which is the highest priority among the currently remaining print jobs is executed.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

The term "system" in the present exemplary embodiment includes both a system configured by a plurality of devices and a system configured by a single device.

### Brief Description of the Reference Symbols

10: printing control server
11: CPU
12: memory
13: storage device
14: communication interface
15: user interface device
16: control bus
21 to 23: printing device
31 to 33: post-processing device
40: network
41: display unit
42: operation input unit
43: data transmission and reception unit
44: control unit
45: environment setting storage unit
51: temperature sensor
52: humidity sensor
53: air conditioning device
60: Internet

## Claims

1. A printing control system comprising:
a processor (11) configured to:
in a case where a plurality of printing device rows (printing lines 1 to 3) configured by a printing device (21, 22, 23) and a device (31, 32, 33) that executes post-processing of a printed matter printed by the printing device(21, 22, 23) are operated in an identical environmental region, group a plurality of printing device rows (printing lines 1 to 3) in which an optimum environmental condition set for each of the plurality of printing device rows (printing lines 1 to 3) is within a preset range; and
detect an environmental state of the environmental region in which the plurality of printing device rows (printing lines 1 to 3) are operated, **characterized in that** the processor (11) is further configured to:
in a case where the detected environmental state is within a preset allowable range from the optimum environmental condition of a certain plurality of printing device rows that are grouped, operate the plurality of printing device rows (printing lines 1 to 3) that are grouped,
in a case where the detected environmental state is not within the preset range from the optimum environmental condition of the plurality of printing device rows (printing lines 1 to 3) being operated that are grouped, stop the operation of the plurality of printing device rows (printing lines 1 to 3) being operated, and
in a case where the environmental state of the environmental region is changed due to the operation of the plurality of printing device rows (printing lines 1 to 3) included in an identical group, and the changed environmental state deviates from the optimum environmental condition of the plurality of printing device rows (printing lines 1 to 3) that are grouped, by more than the preset range, so that the operation of the plurality of printing device rows (printing lines 1 to 3) is stopped, even in a case where the subsequently detected environmental state falls within the preset range from the optimum environmental condition of the plurality of printing device rows (printing lines 1 to 3) that are grouped, operate only the printing device row to which printing processing with a higher priority is assigned among the plurality of printing device rows that are grouped.

2. The printing control system according to claim 1, wherein the processor (11) is configured to:
in a case where there are a plurality of groups of printing device rows (printing lines 1 to 3) in which the detected environmental state is within the preset range from the optimum environmental condition, preferentially operate a group including the printing device rows (printing lines 1 to 3) to which printing processing with a higher priority is assigned among the plurality of groups of printing device rows.

3. The printing control system according to any one of claims 1 to 2, further comprising:
an environment adjusting device (53) configured to adjust an environmental state of the environmental region,
wherein the processor (11) is configured to:
in a case where printing processing by a certain printing device row is ended, control the environment adjusting device such that the environmental state of the environmental region in which the plurality of printing device rows (printing lines 1 to 3) are arranged approaches the optimum environmental condition of the printing device row to which the printing processing with a highest priority is assigned.

4. The printing control system according to claim 3,
wherein the environmental state is any one of or both a temperature and a humidity of the environmental region, and
the environment adjusting device (43) is an air conditioning device that has a function of adjusting the temperature and the humidity of the environmental state.

5. The printing control system according to any one of claims 1 to 2,
wherein the environmental state is a temperature and a humidity of the environmental region, and
the processor (11) is configured to:
in a case where a detected temperature is within an allowable temperature range from an optimum temperature and a detected humidity is within an allowable humidity range, determine that the detected environmental state is within a preset range from the optimum environmental condition.

6. A computer program comprising instructions, when the program is executed by a computer, cause the computer to execute:
grouping, in a case where a plurality of printing device rows (printing lines 1 to 3) configured by a printing device(21, 22, 23) and a device(31, 32, 33) that executes post-processing of a printed matter printed by the printing device (21, 22, 23) are operated in an identical environmental region, a plurality of printing device rows (printing lines 1 to 3)in which an optimum environmental condition set for each of the plurality of printing device rows (printing lines 1 to 3) is within a preset range; and
detecting an environmental state of the environmental region in which the plurality of printing device rows (printing lines 1 to 3) are operated, the program being **characterized in** further causing the computer to execute
operating, in a case where the detected environmental state is within a preset allowable range from the optimum environmental condition of a certain plurality of printing device rows that are grouped, the plurality of printing device rows (printing lines 1 to 3) that are grouped,
in a case where the detected environmental state is not within the preset range from the optimum environmental condition of the plurality of printing device rows (printing lines 1 to 3) being operated that are grouped, stopping the operation of the plurality of printing device rows (printing lines 1 to 3) being operated, and
in a case where the environmental state of the environmental region is changed due to the operation of the plurality of printing device rows (printing lines 1 to 3) included in an identical group, and the changed environmental state deviates from the optimum environmental condition of the plurality of printing device rows (printing lines 1 to 3) that are grouped, by more than the preset range, so that the operation of the plurality of printing device rows (printing lines 1 to 3) is stopped, even in a case where the subsequently detected environmental state falls within the preset range from the optimum environmental condition of the plurality of printing device rows (printing lines 1 to 3) that are grouped, operating only the printing device row to which printing processing with a higher priority is assigned among the plurality of printing device rows that are grouped.

7. A printing control method comprising:
grouping, in a case where a plurality of printing device rows (printing lines 1 to 3) configured by a printing device(21, 22, 23) and a device(31, 32, 33) that executes post-processing of a printed matter printed by the printing device(21, 22, 23) are operated in an identical environmental region, a plurality of printing device rows (printing lines 1 to 3) in which an optimum environmental condition set for each of the plurality of printing device rows (printing lines 1 to 3) is within a preset range; and
detecting an environmental state of the environmental region in which the plurality of printing device rows (printing lines 1 to 3) are operated, the method being **characterized in** further comprising
operating, in a case where the detected environmental state is within a preset allowable range from the optimum environmental condition of a certain plurality of printing device rows (printing lines 1 to 3) that are grouped, the plurality of printing device rows (printing lines 1 to 3) that are grouped,
in a case where the detected environmental state is not within the preset range from the optimum environmental condition of the plurality of printing device rows (printing lines 1 to 3) being operated that are grouped, stopping the operation of the plurality of printing device rows (printing lines 1 to 3) being operated, and
in a case where the environmental state of the environmental region is changed due to the operation of the plurality of printing device rows (printing lines 1 to 3) included in an identical group, and the changed environmental state deviates from the optimum environmental condition of the plurality of printing device rows (printing lines 1 to 3) that are grouped, by more than the preset range, so that the operation of the plurality of printing device rows (printing lines 1 to 3) is stopped, even in a case where the subsequently detected environmental state falls within the preset range from the optimum environmental condition of the plurality of printing device rows (printing lines 1 to 3) that are grouped, operating only the printing device row to which printing processing with a higher priority is assigned among the plurality of printing device rows that are grouped.

## Patentansprüche

1. Drucksteuersystem, umfassend:
einen Prozessor (11), der so konfiguriert ist, dass er:
in einem Fall, in dem mehrere Druckvorrichtungsreihen (Drucklinien 1 bis 3), die durch eine Druckvorrichtung (21, 22, 23) und eine Vorrichtung (31, 32, 33), die Nachverarbeitung eines von der Druckvorrichtung (21, 22, 23) gedruckten Druckwerks ausführt, konfiguriert sind, in einem identischen Umgebungsbereich betrieben werden, mehrere Druckvorrichtungsreihen (Drucklinien 1 bis 3), bei denen eine für jede der mehreren Druckvorrichtungsreihen (Drucklinien 1 bis 3) eingestellte optimale Umgebungsbedingung innerhalb eines voreingestellten Bereichs liegt, gruppiert; und
einen Umgebungszustand des Umgebungsbereichs, in dem die mehreren Druckvorrichtungsreihen (Drucklinien 1 bis 3) betrieben werden, detektiert, **dadurch gekennzeichnet, dass** der Prozessor (11) ferner so konfiguriert ist, dass er:
in einem Fall, in dem der detektierte Umgebungszustand innerhalb eines voreingestellten zulässigen Bereichs von der optimalen Umgebungsbedingung einer bestimmten mehreren Druckvorrichtungsreihen, die gruppiert sind, liegt, die mehreren Druckvorrichtungsreihen (Drucklinien 1 bis 3), die gruppiert sind, betreibt,
in einem Fall, in dem der detektierte Umgebungszustand nicht innerhalb des voreingestellten Bereichs von der optimalen Umgebungsbedingung der mehreren Druckvorrichtungsreihen (Drucklinien 1 bis 3), die betrieben werden, die gruppiert sind, liegt, den Betrieb der mehreren Druckvorrichtungsreihen (Drucklinien 1 bis 3), die betrieben werden, stoppt, und
in einem Fall, in dem der Umgebungszustand des Umgebungsbereichs aufgrund des Betriebs der mehreren Druckvorrichtungsreihen (Drucklinien 1 bis 3), die in einer identischen Gruppe enthalten sind, geändert wird und der geänderte Umgebungszustand von der optimalen Umgebungsbedingung der mehreren Druckvorrichtungsreihen (Drucklinien 1 bis 3), die gruppiert sind, um mehr als den voreingestellten Bereich abweicht, so dass der Betrieb der mehreren Druckvorrichtungsreihen (Drucklinien 1 bis 3) gestoppt wird, selbst in einem Fall, in dem der nachfolgend detektierte Umgebungszustand innerhalb des voreingestellten Bereichs von der optimalen Umgebungsbedingung der mehreren Druckvorrichtungsreihen (Drucklinien 1 bis 3), die gruppiert sind, liegt, nur die Druckvorrichtungsreihe, der Druckverarbeitung mit einer höheren Priorität zugewiesen ist, unter den mehreren Druckvorrichtungsreihen, die gruppiert sind, betreibt.

2. Drucksteuersystem nach Anspruch 1, wobei der Prozessor (11) so konfiguriert ist, dass er:
in einem Fall, in dem es mehrere Gruppen von Druckvorrichtungsreihen (Drucklinien 1 bis 3) gibt, bei denen der detektierte Umgebungszustand innerhalb des voreingestellten Bereichs von der optimalen Umgebungsbedingung liegt, eine Gruppe, die die Druckvorrichtungsreihen (Drucklinien 1 bis 3), der Druckverarbeitung mit einer höheren Priorität zugewiesen ist, unter den mehreren Gruppen von Druckvorrichtungsreihen enthält, bevorzugt betreibt.

3. Drucksteuersystem nach einem der Ansprüche 1 bis 2, ferner umfassend:
eine Umgebungsanpassungsvorrichtung (53), die so konfiguriert ist, dass sie einen Umgebungszustand des Umgebungsbereichs anpasst,
wobei der Prozessor (11) so konfiguriert ist, dass er:
in einem Fall, in dem Druckverarbeitung durch eine bestimmte Druckvorrichtungsreihe beendet wird, die Umgebungsanpassungsvorrichtung so steuert, dass der Umgebungszustand des Umgebungsbereichs, in dem die mehreren Druckvorrichtungsreihen (Drucklinien 1 bis 3) angeordnet sind, sich der optimalen Umgebungsbedingung der Druckvorrichtungsreihe, der die Druckverarbeitung mit einer höchsten Priorität zugewiesen ist, annähert.

4. Drucksteuersystem nach Anspruch 3,
wobei der Umgebungszustand eine beliebige oder beide von einer Temperatur und einer Feuchtigkeit des Umgebungsbereichs sind, und
die Umgebungsanpassungsvorrichtung (43) eine Klimatisierungsvorrichtung ist, die eine Funktion des Anpassens der Temperatur und der Feuchtigkeit des Umgebungszustands aufweist.

5. Drucksteuersystem nach einem der Ansprüche 1 bis 2,
wobei der Umgebungszustand eine Temperatur und eine Feuchtigkeit des Umgebungsbereichs sind, und
der Prozessor (11) so konfiguriert ist, dass er:
in einem Fall, in dem eine detektierte Temperatur innerhalb eines zulässigen Temperaturbereichs von einer optimalen Temperatur liegt und eine detektierte Feuchtigkeit innerhalb eines zulässigen Feuchtigkeitsbereichs liegt, bestimmt, dass der detektierte Umgebungszustand innerhalb eines voreingestellten Bereichs von der optimalen Umgebungsbedingung liegt.

6. Computerprogramm, umfassend Anweisungen, die, wenn das Programm von einem Computer ausgeführt wird, den Computer veranlassen, auszuführen:
Gruppieren, in einem Fall, in dem mehrere Druckvorrichtungsreihen (Drucklinien 1 bis 3), die durch eine Druckvorrichtung (21, 22, 23) und eine Vorrichtung (31, 32, 33), die Nachverarbeitung eines von der Druckvorrichtung (21, 22, 23) gedruckten Druckwerks ausführt, konfiguriert sind, in einem identischen Umgebungsraum betrieben werden, mehrerer Druckvorrichtungsreihen (Drucklinien 1 bis 3), in denen eine für jede der mehreren Druckvorrichtungsreihen (Drucklinien 1 bis 3) eingestellte optimale Umgebungsbedingung innerhalb eines voreingestellten Bereichs liegt; und
Detektieren eines Umgebungszustands des Umgebungsbereichs, in dem die mehreren Druckvorrichtungsreihen (Drucklinien 1 bis 3) betrieben werden, wobei das Programm **dadurch gekennzeichnet ist, dass** es ferner den Computer veranlasst, auszuführen:
Betreiben, in einem Fall, in dem der detektierte Umgebungszustand innerhalb eines voreingestellten zulässigen Bereichs von der optimalen Umgebungsbedingung einer bestimmten mehreren Druckvorrichtungsreihen, die gruppiert sind, liegt, der mehreren Druckvorrichtungsreihen (Drucklinien 1 bis 3), die gruppiert sind,
Stoppen, in einem Fall, in dem der detektierte Umgebungszustand nicht innerhalb des voreingestellten Bereichs von der optimalen Umgebungsbedingung der mehreren Druckvorrichtungsreihen (Drucklinien 1 bis 3), die betrieben werden, die gruppiert sind, liegt, des Betriebs der mehreren Druckvorrichtungsreihen (Drucklinien 1 bis 3), die betrieben werden, und
Betreiben, in einem Fall, in dem der Umgebungszustand des Umgebungsbereichs aufgrund des Betriebs der mehreren Druckvorrichtungsreihen (Drucklinien 1 bis 3), die in einer identischen Gruppe enthalten sind, geändert wird und der geänderte Umgebungszustand von der optimalen Umgebungsbedingung der mehreren Druckvorrichtungsreihen (Drucklinien 1 bis 3), die gruppiert sind, um mehr als den voreingestellten Bereich abweicht, so dass der Betrieb der mehreren Druckvorrichtungsreihen (Drucklinien 1 bis 3) gestoppt wird, selbst in einem Fall, in dem der nachfolgend detektierte Umgebungszustand innerhalb des voreingestellten Bereichs von der optimalen Umgebungsbedingung der mehreren Druckvorrichtungsreihen (Drucklinien 1 bis 3), die gruppiert sind, liegt, nur der Druckvorrichtungsreihe, der Druckverarbeitung mit einer höheren Priorität zugewiesen ist, unter den mehreren Druckvorrichtungsreihen, die gruppiert sind.

7. Drucksteuerverfahren, umfassend:
Gruppieren, in einem Fall, in dem mehrere Druckvorrichtungsreihen (Drucklinien 1 bis 3), die durch eine Druckvorrichtung (21, 22, 23) und eine Vorrichtung (31, 32, 33), die Nachverarbeitung eines von der Druckvorrichtung (21, 22, 23) gedruckten Druckwerks ausführt, konfiguriert sind, in einem identischen Umgebungsraum betrieben werden, mehrerer Druckvorrichtungsreihen (Drucklinien 1 bis 3), in denen eine für jede der mehreren Druckvorrichtungsreihen (Drucklinien 1 bis 3) eingestellte optimale Umgebungsbedingung innerhalb eines voreingestellten Bereichs liegt; und
Detektieren eines Umgebungszustands des Umgebungsbereichs, in dem die mehreren Druckvorrichtungsreihen (Drucklinien 1 bis 3) betrieben werden, wobei das Verfahren **dadurch gekennzeichnet ist, dass** es ferner umfasst:
Betreiben, in einem Fall, in dem der detektierte Umgebungszustand innerhalb eines voreingestellten zulässigen Bereichs von der optimalen Umgebungsbedingung einer bestimmten mehreren Druckvorrichtungsreihen (Drucklinien 1 bis 3), die gruppiert sind, liegt, der mehreren Druckvorrichtungsreihen (Drucklinien 1 bis 3), die gruppiert sind,
Stoppen, in einem Fall, in dem der detektierte Umgebungszustand nicht innerhalb des voreingestellten Bereichs von der optimalen Umgebungsbedingung der mehreren Druckvorrichtungsreihen (Drucklinien 1 bis 3), die betrieben werden, die gruppiert sind, liegt, des Betriebs der mehreren Druckvorrichtungsreihen (Drucklinien 1 bis 3), die betrieben werden, und
Betreiben, in einem Fall, in dem der Umgebungszustand des Umgebungsbereichs aufgrund des Betriebs der mehreren Druckvorrichtungsreihen (Drucklinien 1 bis 3), die in einer identischen Gruppe enthalten sind, geändert wird und der geänderte Umgebungszustand von der optimalen Umgebungsbedingung der mehreren Druckvorrichtungsreihen (Drucklinien 1 bis 3), die gruppiert sind, um mehr als den voreingestellten Bereich abweicht, so dass der Betrieb der mehreren Druckvorrichtungsreihen (Drucklinien 1 bis 3) gestoppt wird, selbst in einem Fall, in dem der nachfolgend detektierte Umgebungszustand innerhalb des voreingestellten Bereichs von der optimalen Umgebungsbedingung der mehreren Druckvorrichtungsreihen (Drucklinien 1 bis 3), die gruppiert sind, liegt, nur der Druckvorrichtungsreihe, der Druckverarbeitung mit einer höheren Priorität zugewiesen ist, unter den mehreren Druckvorrichtungsreihen, die gruppiert sind.

## Revendications

1. Système de contrôle d'impression comprenant :
un processeur (11) configuré pour :
dans un cas où une pluralité de rangées de dispositifs d'impression (lignes d'impression 1 à 3) configurées par un dispositif d'impression (21, 22, 23) et un dispositif (31, 32, 33) qui exécute un post-traitement d'un objet imprimé imprimé par le dispositif d'impression (21, 22, 23) sont opérées dans une région environnementale identique, grouper une pluralité de rangées de dispositifs d'impression (lignes d'impression 1 à 3) dans lesquelles une condition environnementale optimale définie pour chacune de la pluralité de rangées de dispositifs d'impression (lignes d'impression 1 à 3) est dans une plage prédéfinie ; et
détecter un état environnemental de la région environnementale dans laquelle la pluralité de rangées de dispositifs d'impression (lignes d'impression 1 à 3) sont opérées, **caractérisé en ce que** le processeur (11) est en outre configuré pour :
dans un cas où l'état environnemental détecté est dans une plage permise prédéfinie à partir de la condition environnementale optimale d'une certaine pluralité de rangées de dispositifs d'impression qui sont regroupées, opérer la pluralité de rangées de dispositifs d'impression (lignes d'impression 1 à 3) qui sont regroupées,
dans un cas où l'état environnemental détecté n'est pas dans la plage prédéfinie à partir de la condition environnementale optimale de la pluralité de rangées de dispositifs d'impression (lignes d'impression 1 à 3) en cours d'opération qui sont regroupées, arrêter l'opération de la pluralité de rangées de dispositifs d'impression (lignes d'impression 1 à 3) en cours d'opération, et
dans un cas où l'état environnemental de la région environnementale est modifié en raison de l'opération de la pluralité de rangées de dispositifs d'impression (lignes d'impression 1 à 3) incluses dans un groupe identique, et l'état environnemental modifié s'écarte de la condition environnementale optimale de la pluralité de rangées de dispositifs d'impression (lignes d'impression 1 à 3) qui sont regroupées, de plus que la plage prédéfinie, de sorte que l'opération de la pluralité de rangées de dispositifs d'impression (lignes d'impression 1 à 3) est arrêtée, même dans un cas où l'état environnemental détecté ultérieurement tombe dans la plage prédéfinie à partir de la condition environnementale optimale de la pluralité de rangées de dispositifs d'impression (lignes d'impression 1 à 3) qui sont regroupées, opérer uniquement la rangée de dispositifs d'impression à laquelle un traitement d'impression avec une priorité plus élevée est attribué parmi la pluralité de rangées de dispositifs d'impression qui sont regroupées.

2. Système de contrôle d'impression selon la revendication 1, dans lequel le processeur (11) est configuré pour :
dans un cas où il existe une pluralité de groupes de rangées de dispositifs d'impression (lignes d'impression 1 à 3) dans lesquelles l'état environnemental détecté est dans la plage prédéfinie à partir de la condition environnementale optimale, opérer de préférence un groupe incluant les rangées de dispositifs d'impression (lignes d'impression 1 à 3) auxquelles un traitement d'impression avec une priorité plus élevée est attribué parmi la pluralité de groupes de rangées de dispositifs d'impression.

3. Système de contrôle d'impression selon l'une quelconque des revendications 1 à 2, comprenant en outre :
un dispositif de réglage d'environnement (53) configuré pour régler un état environnemental de la région environnementale,
dans lequel le processeur (11) est configuré pour :
dans un cas où un traitement d'impression par une certaine rangée de dispositifs d'impression est terminé, contrôler le dispositif de réglage d'environnement de sorte que l'état environnemental de la région environnementale dans laquelle la pluralité de rangées de dispositifs d'impression (lignes d'impression 1 à 3) sont disposées s'approche de la condition environnementale optimale de la rangée de dispositifs d'impression à laquelle le traitement d'impression avec une priorité la plus élevée est attribué.

4. Système de contrôle d'impression selon la revendication 3,
dans lequel l'état environnemental est l'une quelconque ou les deux d'une température et d'une humidité de la région environnementale, et
le dispositif de réglage d'environnement (43) est un dispositif de conditionnement d'air qui a une fonction de réglage de la température et de l'humidité de l'état environnemental.

5. Système de contrôle d'impression selon l'une quelconque des revendications 1 à 2, dans lequel l'état environnemental est une température et une humidité de la région environnementale, et
le processeur (11) est configuré pour :
dans un cas où une température détectée est dans une plage de température permise à partir d'une température optimale et une humidité détectée est dans une plage d'humidité permise, déterminer que l'état environnemental détecté est dans une plage prédéfinie à partir de la condition environnementale optimale.

6. Programme informatique comprenant des instructions, lorsque le programme est exécuté par un ordinateur, amènent l'ordinateur à exécuter :
grouper, dans un cas où une pluralité de rangées de dispositifs d'impression (lignes d'impression 1 à 3) configurées par un dispositif d'impression (21, 22, 23) et un dispositif (31, 32, 33) qui exécute un post-traitement d'un objet imprimé par le dispositif d'impression (21, 22, 23) sont exploitées dans une région environnementale identique, d'une pluralité de rangées de dispositifs d'impression (lignes d'impression 1 à 3) dans lesquelles une condition environnementale optimale définie pour chacune de la pluralité de rangées de dispositifs d'impression (lignes d'impression 1 à 3) est dans une plage prédéfinie ; et
détecter un état environnemental de la région environnementale dans laquelle la pluralité de rangées de dispositifs d'impression (lignes d'impression 1 à 3) sont exploitées, le programme étant **caractérisé en outre en ce qu'**il amène l'ordinateur à exécuter
opérer, dans un cas où l'état environnemental détecté est dans une plage permise prédéfinie à partir de la condition environnementale optimale d'une certaine pluralité de rangées de dispositifs d'impression qui sont regroupées, la pluralité de rangées de dispositifs d'impression (lignes d'impression 1 à 3) qui sont regroupées,
dans un cas où l'état environnemental détecté n'est pas dans la plage prédéfinie à partir de la condition environnementale optimale de la pluralité de rangées de dispositifs d'impression (lignes d'impression 1 à 3) en cours d'opération qui sont regroupées, arrêter l'opération de la pluralité de rangées de dispositifs d'impression (lignes d'impression 1 à 3) en cours d'opération, et
dans un cas où l'état environnemental de la région environnementale est modifié en raison de l'opération de la pluralité de rangées de dispositifs d'impression (lignes d'impression 1 à 3) incluses dans un groupe identique, et l'état environnemental modifié s'écarte de la condition environnementale optimale de la pluralité de rangées de dispositifs d'impression (lignes d'impression 1 à 3) qui sont regroupées, de plus que la plage prédéfinie, de sorte que l'opération de la pluralité de rangées de dispositifs d'impression (lignes d'impression 1 à 3) est arrêtée, même dans un cas où l'état environnemental détecté ultérieurement tombe dans la plage prédéfinie à partir de la condition environnementale optimale de la pluralité de rangées de dispositifs d'impression (lignes d'impression 1 à 3) qui sont regroupées, opérer uniquement la rangée de dispositifs d'impression à laquelle un traitement d'impression avec une priorité plus élevée est attribué parmi la pluralité de rangées de dispositifs d'impression qui sont regroupées.

7. Procédé de contrôle d'impression comprenant :
grouper, dans un cas où une pluralité de rangées de dispositifs d'impression (lignes d'impression 1 à 3) configurées par un dispositif d'impression (21, 22, 23) et un dispositif (31, 32, 33) qui exécute un post-traitement d'un objet imprimé par le dispositif d'impression (21, 22, 23) sont exploitées dans une région environnementale identique, d'une pluralité de rangées de dispositifs d'impression (lignes d'impression 1 à 3) dans lesquelles une condition environnementale optimale définie pour chacune de la pluralité de rangées de dispositifs d'impression (lignes d'impression 1 à 3) est dans une plage prédéfinie ; et
détecter un état environnemental de la région environnementale dans laquelle la pluralité de rangées de dispositifs d'impression (lignes d'impression 1 à 3) sont exploitées, le procédé étant **caractérisé en outre en ce qu'**il comprend dans un cas où l'état environnemental détecté est dans une plage permise prédéfinie à partir de la condition environnementale optimale d'une certaine pluralité de rangées de dispositifs d'impression (lignes d'impression 1 à 3) qui sont regroupées, opérer la pluralité de rangées de dispositifs d'impression (lignes d'impression 1 à 3) qui sont regroupées,
dans un cas où l'état environnemental détecté n'est pas dans la plage prédéfinie à partir de la condition environnementale optimale de la pluralité de rangées de dispositifs d'impression (lignes d'impression 1 à 3) en cours d'opération qui sont regroupées, arrêter l'opération de la pluralité de rangées de dispositifs d'impression (lignes d'impression 1 à 3) en cours d'opération, et
dans un cas où l'état environnemental de la région environnementale est modifié en raison de l'opération de la pluralité de rangées de dispositifs d'impression (lignes d'impression 1 à 3) incluses dans un groupe identique, et l'état environnemental modifié s'écarte de la condition environnementale optimale de la pluralité de rangées de dispositifs d'impression (lignes d'impression 1 à 3) qui sont regroupées, de plus que la plage prédéfinie, de sorte que l'opération de la pluralité de rangées de dispositifs d'impression (lignes d'impression 1 à 3) est arrêtée, même dans un cas où l'état environnemental détecté ultérieurement tombe dans la plage prédéfinie à partir de la condition environnementale optimale de la pluralité de rangées de dispositifs d'impression (lignes d'impression 1 à 3) qui sont regroupées, opérer uniquement la rangée de dispositifs d'impression à laquelle un traitement d'impression avec une priorité plus élevée est attribué parmi la pluralité de rangées de dispositifs d'impression qui sont regroupées.
